# EUROPÄISCHE PATENTSCHRIFT

(11) **EP 3 159 490 B1**
(45) Veröffentlichungstag und Bekanntmachung des Hinweises auf die Patenterteilung: **06.10.2021**
(21) Anmeldenummer: 16193949.1
(22) Anmeldetag: 14.10.2016
(51) Int. Cl.: F01D 11/04, F01D 25/18, F02C 7/25, F01D 25/12

(54) **STRAHLTRIEBWERK MIT MEHREREN KAMMERN UND EINEM LAGERKAMMERTRÄGER**
JET ENGINE HAVING SEVERAL COMPARTMENTS AND A BEARING HOUSING CARRIER
MOTEUR À RÉACTION COMPRENANT PLUSIEURS CHAMBRES ET UN SUPPORT DE LOGEMENT DE PALIER

(30) Priorität: 19.10.2015 DE 102015117773
(43) Veröffentlichungstag der Anmeldung: 26.04.2017
(73) Patentinhaber: Rolls-Royce Deutschland Ltd & Co KG, 15827 Blankenfelde-Mahlow (DE)
(72) Erfinder: Friedl, Winfried-Hagen, 15827 Blankenfelde-Mahlow (DE)
(74) Vertreter: Schmidt, Martin Michael

(56) Entgegenhaltungen:
- EP-A2- 0 752 515
- DE-A1- 19 719 777
- DE-A1-102009 012 038
- DE-T5-112012 005 939
- US-A1- 2005 235 651
- None

## Beschreibung

Die Erfindung betrifft ein Strahltriebwerk mit einer Lagerkammer, einer Sperrkammer, einer Entlüftungskammer und einem Lagerkammerträger gemäß der im Patentanspruch 1 näher definierten Art.

Aus der Praxis sind Strahltriebwerke mit einer Lagerkammer im Bereich einer Turbineneinrichtung bekannt, in deren Bereich eine Niederdruckwelle gegenüber einer Hochdruckwelle mittels zwei Lagereinrichtungen gelagert ist. Im Betrieb des Strahltriebwerks bildet sich durch eine Vermischung von Luft mit Öl, das zur Schmierung der Lagereinrichtungen vorgesehen ist, in der Lagerkammer ein Luft-Öl-Gemisch. Um einen Austritt des Luft-Öl-Gemischs aus der Lagerkammer zu verhindern, wird die Lagerkammer im Betrieb des Strahltriebwerks mit sogenannter Sperrluft beaufschlagt. Hierzu ist stromauf und stromab der Lagerkammer jeweils eine durch eine Labyrinthdichtung von der Lagerkammer getrennte Sperrkammer vorgesehen, wobei die Sperrluft über eine Sperrluftleitung den Sperrkammern zugeführt wird und über die jeweilige Labyrinthdichtung in die Lagerkammer weitergeleitet wird.

Zudem ist jeweils auf den den Lagerkammern abgewandten Seiten der Sperrkammern eine Entlüftungskammer angeordnet, die wiederum jeweils über eine Labyrinthdichtung von der jeweiligen Sperrkammer getrennt ist und ebenfalls ausgehend von den Sperrkammern mit Sperrluft beaufschlagt werden. Die Entlüftungskammern stehen über eine Entlüftungseinrichtung in Wirkverbindung mit einem Kernstromkanal bzw. Hauptgaskanal, so dass im Betrieb des Strahltriebwerks aus den Entlüftungskammern ein Luftgemisch in den Kernstromkanal abgeführt wird. Für den Fall, dass aus der Lagerkammer ein Luft-Öl-Gemisch in die Sperrkammern übertreten sollte, wird dieses Gemisch über die Entlüftungskammern und die Entlüftungseinrichtungen in den Kernstromkanal abgeführt. Durch die Entlüftungseinrichtungen wird somit verhindert, dass das Luft-Öl-Gemisch in einen Rotoren aufweisenden Rotorraum eintritt und durch eine Entzündung des Luft-Öl-Gemischs aufgrund von in diesem Bereich im Betrieb des Strahltriebwerks hohen vorliegenden Temperaturen ein Brand bzw. ein sogenanntes Ölfeuer auftritt, das in diesem Bereich einen unerwünschten Schaden verursachen könnte.

Die Entlüftungseinrichtung wird bei aus der Praxis bekannten Ausführungen durch einen die Lagereinrichtungen tragenden Lagerkammerträger bzw. einen Lagerträger zusammen mit Blechaufsätzen gebildet, die stromauf und stromab des Lagerkammerträgers angeordnet sind. Hierdurch werden sich von der jeweiligen Entlüftungskammer bis zu dem Kernstromkanal erstreckende und als Ringräume ausgeführte Strömungsbereiche gebildet, die als sogenannte Hot-Vent-Passagen bezeichnet werden. Durch die Entlüftungseinrichtung kann Luft bzw. ein Luft-Öl-Gemisch aus den Entlüftungskammern in den Kernstromkanal abgeführt werden, wobei eine Entzündung des in den Kernstromkanal eingeführten Luft-Öl-Gemischs in diesem Bereich gut handhabbar ist.

Aufgrund von Toleranzen und mechanischen Randbedingungen kann bei derartig ausgeführten Entlüftungseinrichtungen allerdings ein Abstand zwischen dem Lagerkammerträger und den Blechaufsätzen nicht beliebig klein eingestellt werden, so dass eine Querschnittsfläche der Entlüftungseinrichtungen in radialer Richtung des Strahltriebwerks nach außen zunimmt und eine Strömungsgeschwindigkeit innerhalb der Entlüftungseinrichtungen ungünstig beeinflusst werden kann. Weiterhin sind die Blechaufsätze zur Erzielung einer gewünschten Beständigkeit gegenüber einem unter Umständen auftretenden Ölfeuer in den Entlüftungsleitungen massiv auszuführen, wodurch das Strahltriebwerk nachteilhafterweise ein großes Gewicht aufweist.

Aus der EP 0 752 515 A2 ist eine Lagerkammer-Anordnung gemäß der oben näher beschriebenen Art bekannt, bei der die Sperrkammer über eine Zuführleitung mit Sperrluft versorgt wird. Aus der Entlüftungskammer wird die Sperrluft über eine Entlüftungsleitung in einen Strömungskanal abgeführt.

Der vorliegenden Erfindung liegt die Aufgabe zugrunde, ein gewichtsoptimiertes Strahltriebwerk zur Verfügung zu stellen, bei dem die Entlüftungseinrichtung konstruktiv einfach ausgeführt ist und eine gewünschte Strömungsgeschwindigkeit eines in der Entlüftungseinrichtung geführten Volumenstroms über dem gesamten Verlauf der Entlüftungseinrichtung erzielbar ist.

Erfindungsgemäß wird diese Aufgabe mit einem Strahltriebwerk mit den Merkmalen des Patentanspruches 1 gelöst.

Es wird ein Strahltriebwerk mit einer Lagerkammer, einer Sperrkammer, einer Entlüftungskammer und einem Lagerkammerträger vorgeschlagen, der bereichsweise die wenigstens eine Lagereinrichtung aufweisende Lagerkammer begrenzt. Die Lagerkammer ist über eine Dichtungseinrichtung von der Sperrkammer getrennt, die wiederum über eine weitere Dichtungseinrichtung von der auf einer der Lagerkammer abgewandten Seite der Sperrkammer angeordneten Entlüftungskammer getrennt ist. Die Sperrkammer ist mit einer Sperrluftleitung verbunden, mittels der die Lagerkammer mit einem Sperrluftvolumenstrom versorgbar ist. Die Entlüftungskammer ist mit einer Entlüftungseinrichtung verbunden, über die ein Volumenstrom aus der Entlüftungskammer in einen Kernstromkanal des Strahltriebwerks abführbar ist. Die Entlüftungseinrichtung ist als wenigstens eine Entlüftungsleitung mit einem rohrförmigen Strömungsquerschnitt ausgeführt.

Durch die erfindungsgemäße Ausführung der Entlüftungsleitung kann auf konstruktiv einfache Weise eine gewünschte Strömungsgeschwindigkeit eines während eines Betriebs des Strahltriebwerks durch die Entlüftungsleitung geführten Volumenstroms bzw. Fluids, auch als sogenannter Hot-Vent bezeichnet, erzielt werden. Dies resultiert daraus, dass die beispielsweise mit einem ovalen, insbesondere kreisförmigen, einem rechteckigen, insbesondere quadratischen, oder vergleichbaren Querschnitt ausgeführte Entlüftungsleitung, die sich insbesondere von der Entlüftungskammer bis zu dem Kernstromkanal erstreckt, mit geringen Toleranzen ausführbar ist. Zudem ist die erfindungsgemäße Entlüftungsleitung vorteilhafterweise mit einem geringen Gewicht und geringeren Kosten herstellbar. Da die Entlüftungsleitung gegenüber der aus der Praxis bekannten Ausführung der Entlüftungseinrichtung mit einem Blechaufsatz unter Einhaltung vorgegebener Toleranzen mit einem reduzierten Strömungsquerschnitt ausführbar ist, reicht bei der erfindungsgemäßen Lösung zur sicheren Abdichtung der Lagerkammer und zur Abführung eines Volumenstroms aus der Entlüftungskammer ein gegenüber der bekannten Ausführung reduzierter Sperrluftvolumenstrom aus. Hierdurch ist vorteilhafterweise ein Wirkungsgrad des Strahltriebwerks verbessert.

Durch die Ausführung der Entlüftungsleitung mit einem rohrartigen Strömungsquerschnitt kann auf einfache Weise sichergestellt werden, dass in der gesamten Entlüftungsleitung eine Strömungsgeschwindigkeit im Wesentlichen konstant ist und insbesondere oberhalb einer sogenannten Flammgeschwindigkeit eines in der Entlüftungsleitung geführten Luft-Öl-Gemischs ist. Hierdurch kann ein stabiles Ölfeuer in der Entlüftungsleitung in sämtlichen Betriebszuständen des Strahltriebwerks sicher vermieden werden.

Die Entlüftungsleitung weist einen Bereich mit einer definierten Querschnittserweiterung auf. Dieser Bereich stellt hierbei eine Rezirkulationszone dar, in der sich durch eine Reduktion der Strömungsgeschwindigkeit ein Ölfeuer ausbilden kann. Hierdurch kann sichergestellt werden, dass für den Fall, dass sich im Bereich der Entlüftungsleitung ein Ölfeuer ausbildet, dieses in dem definierten Bereich auftritt. Der Bereich kann dabei auf einfache Weise derart gestaltet werden, dass er einem Ölfeuer auf sichere Weise in gewünschtem Umfang standhält. Um ein Ölfeuer in der Entlüftungsleitung detektieren zu können, reicht es somit aus, wenn lediglich in dem definierten Bereich Sensoren zur Ermittlung eines Ölfeuers angeordnet sind. Alternativ hierzu kann beispielsweise mittels einer Boroskopie-Untersuchung lediglich in diesem Bereich festgestellt werden, ob ein Ölfeuer in der Entlüftungsleitung stattgefunden hat. Die Gefahr einer nicht festgestellten Beschädigung durch ein Ölfeuer ist hierdurch auf einfache Weise reduziert.

Ein Strömungsquerschnitt der Entlüftungsleitung vergrößert sich stromab des Bereichs gegenüber einem Strömungsquerschnitt in dem Bereich im Wesentlichen nicht und ist insbesondere wenigstens annähernd konstant. Damit kann sichergestellt werden, dass ein stabilisiertes Ölfeuer in der Entlüftungsleitung nur in dem definierten Bereich auftreten kann.

Bei einer besonders vorteilhaften Ausführung des erfindungsgemäßen Strahltriebwerks ist es vorgesehen, dass der Lagerkammerträger als ein Gussbauteil ausgeführt ist und die Entlüftungsleitung Teil des Lagerkammerträgers ist. Durch das Eingießen der Entlüftungsleitung in den Lagerkammerträger ist das Strahltriebwerk besonders leicht ausführbar, wobei zudem ein Strömungsquerschnitt der Entlüftungsleitung und ein Verlauf der Entlüftungsleitung in dem Lagerkammerträger vorteilhafterweise genau einstellbar ist. Auch die Montage des Strahltriebwerks ist gegenüber bekannten Ausführungen durch die Integration der Entlüftungsleitung in den Lagerkammerträger vereinfacht.

Es kann zudem vorgesehen sein, dass die Entlüftungsleitung einen Anbindungsstutzen zur Anbindung an die Entlüftungskammer und/oder den Kernstromkanal aufweist, wobei dieser bzw. diese als sich über den Lagerkammerträger hinaus erstreckende und in einem Gießvorgang mit dem Lagerkammerträger hergestellte integrale Bauteile herstellbar ist bzw. sind.

Alternativ kann dieser bzw. können diese auch als separate Bauteile ausgeführt sein, die bzw. der in Wirkverbindung mit dem Lagerkammerträger bringbar ist bzw. sind. Durch die Integration der Entlüftungsleitung in den Lagerkammerträger ist ein erfindungsgemäßes Strahltriebwerk gegenüber bekannten Ausführungen vorteilhafterweise bei höheren Temperaturen im Bereich der Entlüftungsleitung einsetzbar, da Aufenthaltszeiten des gegebenenfalls ölhaltigen Gemischs in der Entlüftungsleitung gegenüber bekannten Ausführungen bei entsprechender Strömungsquerschnittsgestaltung reduzierbar sind und hierdurch kürzere Zündverzugszeiten bei höheren Temperaturen handhabbar sind.

Bei einer vorteilhaften Ausführung der Erfindung ist die Entlüftungsleitung als separate Leitung ausgeführt, die zumindest bereichsweise in einem Umfangsbereich des Lagerkammerträgers angeordnet ist. Die Entlüftungsleitung ist hierbei unabhängig von dem Lagerkammerträger herstellbar und kann beispielsweise mit einer für einen Hochtemperaturbereich geeigneten Metalllegierung oder mit Keramik ausgeführt sein.

Der Querschnitt der Entlüftungsleitung nimmt bei einer vorteilhaften Ausführung der Erfindung in dem Bereich um einen Faktor von mindestens zwei, vorzugsweise von etwa zehn zu. Durch diese sprunghafte Querschnittserweiterung der Entlüftungsleitung kann auf einfache Weise sichergestellt werden, dass ein Ölfeuer in der Entlüftungsleitung in dem definierten Bereich auftritt. Zudem ist der Bereich auf einfache Weise an einer gewünschten Position in der Entlüftungsleitung positionierbar.

Der definierte Bereich bzw. eine Rezirkulationszone kann auf einfache Weise geschaffen werden, wenn eine Wandung der Entlüftungsleitung in dem Bereich gegenüber einer Mittelachse der Entlüftungsleitung einen Winkel aufweist, der größer als 15°, insbesondere größer als 60°, vorzugsweise größer als 75° ist, und insbesondere etwa 90° beträgt, wobei die Entlüftungsleitung stromab des Bereichs einen größeren Strömungsquerschnitt als stromauf des Bereichs aufweist.

Die Sperrkammer und die Entlüftungskammer können jeweils stromab oder stromauf der Lagerkammer angeordnet sein, wobei vorzugsweise sowohl stromab als auch stromauf der Lagerkammer jeweils eine Sperrkammer und eine Entlüftungskammer vorgesehen sind.

Bei einer vorteilhaften Ausführung eines erfindungsgemäßen Strahltriebwerks ist es vorgesehen, dass wenigstens eine Entlüftungsleitung mit der Entlüftungskammer stromauf der Lagerkammer und wenigstens eine weitere Entlüftungsleitung mit der Entlüftungskammer stromab der Lagerkammer verbunden ist, wobei diese beispielsweise in verschiedenen Umfangsbereichen des Strahltriebwerks angeordnet sein können und hierdurch einfach in den Lagerkammerträger integrierbar sind und/oder auf einfache Weise in einem Umfangsbereich des Lagerkammerträgers als separate Leitungen anordenbar sind.

Es kann vorgesehen sein, dass mehrere Entlüftungsleitungen vorgesehen sind, über die Fluid aus einer Entlüftungskammer dem Kernstromkanal zuführbar ist. Diese sind vorzugsweise in verschiedenen Umfangsbereichen des Lagerkammerträgers angeordnet.

Bei einer hinsichtlich des Bauraums optimierten Ausführung des Strahltriebwerks ist es vorgesehen, dass die Entlüftungsleitung und die weitere Entlüftungsleitung stromauf des Kernstromkanals miteinander verbunden sind und gemeinsam insbesondere stromab einer Sperrluftleitung dem Kernstromkanal zugeführt werden. Alternativ hierzu kann es auch vorgesehen sein, dass die Entlüftungsleitung und die weitere Entlüftungsleitung separat in den Kernstromkanal münden, wobei die Leitungen insbesondere stromab einer Sperrluftleitung dem Kernstromkanal zugeführt werden.

Der Lagerkammerträger des erfindungsgemäßen Strahltriebwerks kann im Bereich einer Turbineneinrichtung und/oder im Bereich einer Verdichtereinrichtung bzw. Kompressoreinrichtung des Strahltriebwerks angeordnet sein.

Sowohl die in den Patentansprüchen angegebenen Merkmale als auch die in den nachfolgenden Ausführungsbeispielen des erfindungsgemäßen Strahltriebwerks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen eines erfindungsgemäßen Strahltriebwerks ergeben sich aus den Patentansprüchen und den nachfolgend unter Bezugnahme auf die in der Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Ausschnitts eines Strahltriebwerks im Bereich einer Turbinenvorrichtung, wobei eine Lagerkammer und mehrere daran anschließende weitere Kammern ersichtlich sind, und wobei eine mit einer stromauf der Lagerkammer angeordneten Entlüftungskammer verbundene Entlüftungsleitung dargestellt ist, die in einen Lagerkammerträger integriert ist;
- Fig. 2: eine weitere Längsschnittansicht eines Ausschnitts des Strahltriebwerks der Fig. 1, wobei eine in den Lagerkammerträger integrierte weitere Entlüftungsleitung näher ersichtlich ist, die mit einer stromab der Lagerkammer angeordneten Entlüftungskammer verbunden ist;
- Fig. 3: eine der Fig. 1 entsprechende Darstellung des Strahltriebwerks, wobei eine weitere Ausführungsform einer in den Lagerkammerträger integrierten Entlüftungsleitung mit einem Rezirkulationsbereich gezeigt ist;
- Fig. 4: eine der Fig. 2 entsprechende Darstellung des Strahltriebwerks, wobei eine weitere Ausführungsform einer in den Lagerkammerträger integrierten weiteren Entlüftungsleitung mit einem Rezirkulationsbereich ersichtlich ist;
- Fig. 5: eine weitere alternative Ausführung einer Entlüftungsleitung mit einem Rezirkulationsbereich, die mit der stromauf der Lagerkammer angeordneten Entlüftungskammer verbunden ist, wobei die Entlüftungsleitung als separate Leitung ausgeführt ist; und
- Fig. 6: eine weitere alternative Ausführung einer weiteren Entlüftungsleitung mit einem Rezirkulationsbereich, die mit der stromab der Lagerkammer angeordneten Entlüftungskammer verbunden ist, wobei die weitere Entlüftungsleitung als separate Leitung ausgeführt ist.

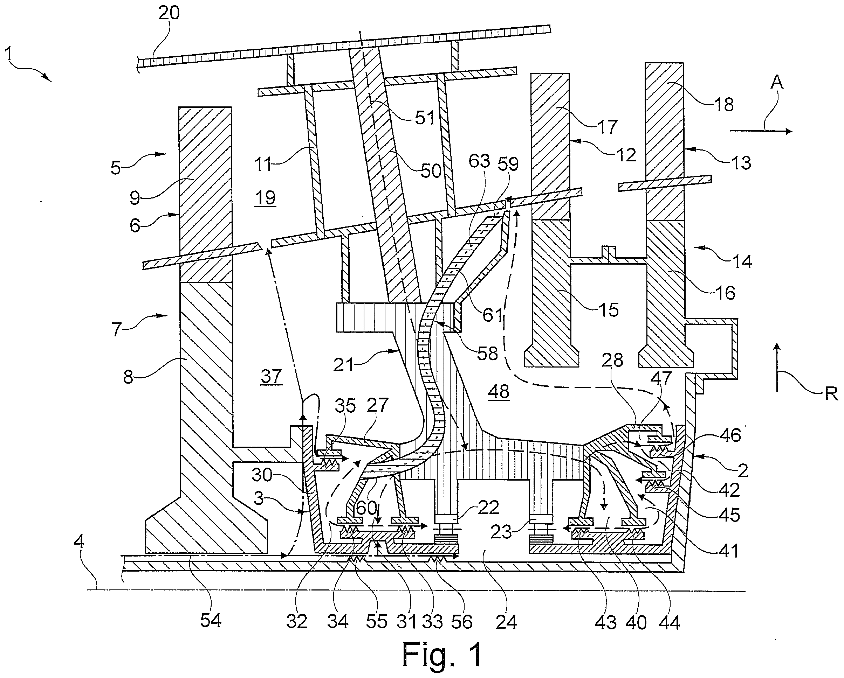

Fig. 1 zeigt einen Ausschnitt eines Strahltriebwerks 1 bzw. Flugtriebwerks in einer Längsschnittansicht im Bereich einer Turbinenvorrichtung 5. Das Strahltriebwerk 1 ist vorliegend zweiwellig mit einer Niederdruckwelle 2 und einer Hochdruckwelle 3 ausgeführt, die um eine Drehachse 4 drehbar gelagert sind. Bei einer hierzu alternativen Ausführung der Erfindung kann das Strahltriebwerk auch dreiwellig ausgeführt sein.

Weiterhin ist eine Stufe 6 einer Hochdruckturbine 7 der Turbinenvorrichtung 5 ersichtlich, die mit einem Scheibenrad 8 und umfangsseitig daran angeordneten Laufschaufeln 9 ausgeführt ist. In vergleichbarer Weise sind hier zwei Stufen 12, 13 einer Niederdruckturbine 14 der Turbinenvorrichtung 5 ersichtlich, die ebenfalls jeweils mit einem Scheibenrad 15 bzw. 16 und umfangsseitig daran angeordneten Laufschaufeln 17 bzw. 18 ausgeführt sind. Die Laufschaufeln 9 der Hochdruckturbine 7 sind gemeinsam mit den Laufschaufeln 17, 18 der Niederdruckturbine in einem Kernstromkanal 19 des Strahltriebwerks 1 angeordnet.

In axialer Richtung A des Strahltriebwerks 1 zwischen der Hochdruckturbine 7 und der Niederdruckturbine 14 ist ein im Bereich von Leitschaufeln 11 der Niederdruckturbine 14 mit einem Gehäuse 20 fest verbundener Lagerkammerträger 21 angeordnet, der eine zwei Lagereinrichtungen 22, 23 aufweisende Lagerkammer 24 in radialer Richtung R des Strahltriebwerks 1 nach außen begrenzt. Über die Lagereinrichtungen 22, 23 ist die Hochdruckwelle 3 gegenüber der Niederdruckwelle 2 gelagert.

In axialer Richtung A des Strahltriebwerks 1 stromauf und stromab des Lagerkammerträgers 21 ist dieser jeweils fest mit einem mehrere Arme aufweisenden Dichtungsträger 27, 28 verbunden, wobei der Dichtungsträger 27 zusammen mit einer fest mit dem Scheibenrad 8 der Hochdruckturbine 7 verbundenen Stützwelle 30 sowohl eine stromauf der Lagerkammer 24 angeordnete Sperrkammer 31 als auch eine auf einer der Lagerkammer 24 abgewandten Seite an die Sperrkammer 31 grenzende Entlüftungskammer 32 begrenzt. Die Kammern 24, 31, 32 sind dabei jeweils über als Labyrinthdichtungen 33, 34, 35 ausgeführte Dichteinrichtungen voneinander getrennt, wobei die Labyrinthdichtung 33 zwischen der Lagerkammer 24 und der Sperrkammer 31 und die Labyrinthdichtung 34 zwischen der Sperrkammer 31 und der Entlüftungskammer 32 angeordnet sind. Die Entlüftungskammer 32 ist über die weitere Labyrinthdichtung 35 von einem das Scheibenrad 8 aufweisenden Innenraum 37 getrennt.

Stromab der Lagerkammer 24 sind ebenfalls eine Sperrkammer 40 und eine Entlüftungskammer 41 vorgesehen. Die Sperrkammer 40 ist stromab der Lagerkammer 21 angeordnet, durch eine als Labyrinthdichtung 43 ausgeführte Dichteinrichtung von der Lagerkammer 21 getrennt und wird von dem Dichtungsträger 28 und einer fest mit der Niederdruckwelle 2 verbundenen Stützwelle 42 begrenzt. Wiederum stromab der Sperrkammer 40 ist auf einer der Lagerkammer 21 abgewandten Seite der Sperrkammer 40 die Entlüftungskammer 41 angeordnet. Die Entlüftungskammer 41 ist über eine wiederum als Labyrinthdichtung 44 ausgeführte Dichteinrichtung von der Sperrkammer 40 getrennt und wird ebenfalls von dem Dichtungsträger 28 und der Stützwelle 42 begrenzt. Auf einer der Sperrkammer 40 abgewandten Seite der Entlüftungskammer 41 ist hier eine weitere Kammer 47 angeordnet, die einerseits über eine als Labyrinthdichtung 45 ausgeführte Dichteinrichtung von der Entlüftungskammer 41 getrennt ist und andererseits über eine weitere als Labyrinthdichtung 46 ausgeführte Dichteinrichtung an einen Innenraum 48 grenzt, in dem die Scheibenräder 15, 16 der Niederdruckturbine 14 angeordnet sind.

Es ist eine Sperrluftleitung 50 vorgesehen, die sich durch den Kernstromkanal 19 bis zu dem als Gussbauteil ausgeführten Lagerkammerträger 21 erstreckt und über nicht näher ersichtliche Passagen in dem Lagerkammerträger 21 einem Ringraum innerhalb des Lagerkammerträgers 21 zugeführt wird, der in Wirkverbindung mit den Sperrkammern 31 und 40 steht. Über die Sperrluftleitung 50 wird im Betrieb des Strahltriebwerks 1 Sperrluft, beispielsweise unter Druck stehende Luft aus einer Kompressorstufe gemäß der strichliert gezeichneten Linie 51 über die Passagen und den Ringraum sowohl in die stromauf der Lagerkammer 24 angeordnete Sperrkammer 31 als auch in die stromab der Lagerkammer 24 angeordnete Sperrkammer 40 geleitet. Von den Sperrkammern 31 bzw. 40 wird die Sperrluft über die Labyrinthdichtungen 33 und 43 der Lagerkammer 24 zugeführt, so dass diese abgedichtet wird.

Im Betrieb des Strahltriebwerks 1 vermischt sich Luft im Bereich der Lagerkammer 24 mit zur Schmierung der Lagereinrichtungen 22, 23 vorgesehenem Öl, so dass im Bereich der Lagerkammer 24 ein Luft-Öl-Gemisch vorliegt. Durch die oben näher beschriebene Sperrluft wird ein Austritt dieses ölhaltigen Gemischs aus der Lagerkammer 24 vermieden.

Neben der Lagerkammer 24 wird über die Labyrinthdichtungen 34 bzw. 44 ausgehend von den Sperrkammern 31, 40 auch die jeweilige Entlüftungskammer 32 bzw. 41 mit Sperrluft beaufschlagt. Zusätzlich wird die Sperrluft ausgehend von dem Ringraum des Lagerkammerträgers 21 neben einer Einleitung in die stromab der Lagerkammer 24 angeordnete Sperrkammer 40 auch der weiteren stromab der Lagerkammer 24 angeordneten Kammer 47 zugeführt. Hiervon ausgehend wird mittels der Sperrluft sowohl über die Labyrinthdichtung 45 die Entlüftungskammer 41 als auch über die Labyrinthdichtung 46 der Innenraum 48 beaufschlagt, wobei die Sperrluft von dem Innenraum 48 über einen stromab der Sperrluftleitung 50 angeordneten Bereich dem Kernstromkanal 19 zugeführt wird.

Zudem wird die Lagerkammer 24 mit einem weiteren Sperrluftstrom beaufschlagt, der der Lagerkammer 24 gemäß der strichpunktierten Linie 54 über zwei weitere als Labyrinthdichtungen 55, 56 ausgeführte und zwischen der Niederdruckwelle 2 und der Stützwelle 30 der Hochdruckwelle 3 angeordnete Dichteinrichtungen zugeführt wird. Weiterhin wird die Sperrluft über eine in den Figuren nicht näher dargestellte Öffnung in der Stützwelle 30 der Hochdruckwelle 3 in die stromauf der Lagerkammer 24 angeordnete Sperrkammer 31 eingeleitet. Darüber hinaus wird die Sperrluft stromauf der Entlüftungskammer 32 auch dem Innenraum 37 zugeführt, von wo aus sie einerseits zurück in den Kernstromkanal 19 und andererseits über die Labyrinthdichtung 35 in die Entlüftungskammer 32 geleitet wird.

Fig. 1 zeigt weiterhin eine Entlüftungsleitung 58 bzw. Hot-Vent-Leitung, die mit der stromauf der Lagerkammer 24 angeordneten Entlüftungskammer 32 verbunden ist. Die Entlüftungsleitung 58 erstreckt sich ausgehend von der Entlüftungskammer 32 zunächst im Wesentlichen in axialer Richtung A des Strahltriebwerks 1 durch den Dichtungsträger 27 zu dem Lagerkammerträger 21. Innerhalb des Lagerkammerträgers 21 verläuft die Entlüftungsleitung 58 im Wesentlichen in radialer Richtung R des Strahltriebwerks 1 nach außen zu einem Auslass 59 der Entlüftungsleitung 58, der in einem Bereich eines Annulus des Kernstromkanals 19 angeordnet ist, der stromab der Sperrluftleitung 50 angeordnet ist und in Wirkverbindung mit dem Innenraum 48 steht. Die gesamte Entlüftungsleitung 58 erstreckt sich - wie in Fig. 1 ersichtlich ist ― im Wesentlichen in einer Längsschnittebene des Strahltriebwerks 1.

Die Entlüftungsleitung 58 ist vorliegend integral mit dem als Gussbauteil ausgeführten Lagerkammerträger 21 ausgebildet und kann auf einfache Weise in einem Gießverfahren gemeinsam mit diesem hergestellt werden. Vorliegend sind an den Lagerkammerträger 21 sowohl in einem dem Kernstromkanal 19 zugewandten Bereich als auch in einem der Entlüftungskammer 32 zugewandten Bereich jeweils Stutzen 60, 61 bzw. Verlängerungen angegossen, welche in einem Schritt mit dem Lagerkammerträger 21 herstellbar sind. Alternativ hierzu kann es auch vorgesehen sein, dass die Stutzen separate Bauteile darstellen, die an dem Lagerkammerträger 21 anordenbar sind.

Durch die Entlüftungsleitung 58 wird im Betrieb des Strahltriebwerks 1 im Bereich der Entlüftungskammer 32 vorliegende Luft entlang der gepunkteten Linie 63 in den Kernstromkanal 19 geleitet. Die Entlüftungsleitung 58 ist dafür vorgesehen, dass für den Fall, dass mit Öl beaufschlagte Luft aus der Lagerkammer 24 in Richtung der Sperrkammern 31 bzw. 40 und der Entlüftungskammern 32 bzw. 41 austritt, diese nicht in den Innenraum 37 gelangen kann, in dessen Bereich eine Entflammung des Luft-Öl-Gemischs einen unerwünschten Schaden verursachen könnte, sondern in den Kernstromkanal 19 abgeführt wird, in dessen Bereich eine Entflammung des Luft-Öl-Gemischs gut handhabbar ist.

Die Entlüftungsleitung 58 ist insgesamt rohrförmig mit einem vorliegenden ovalen Strömungsquerschnitt ausgeführt, wobei der Strömungsquerschnitt der Entlüftungsleitung 58 ausgehend von der Entlüftungskammer 32 bis zu dem Auslass 59 im Wesentlichen unverändert ist. Hierdurch kann auf einfache Weise erreicht werden, dass eine Strömungsgeschwindigkeit des in der Entlüftungsleitung 58 geführten Gemischs insbesondere in sämtlichen Betriebszuständen oberhalb einer Entflammgeschwindigkeit liegt, so dass im Falle einer Führung von mit Öl beladener Luft in der Entlüftungsleitung 58 eine Entflammung dieses Gemischs im Bereich der Entlüftungsleitung 58 sicher vermieden ist.

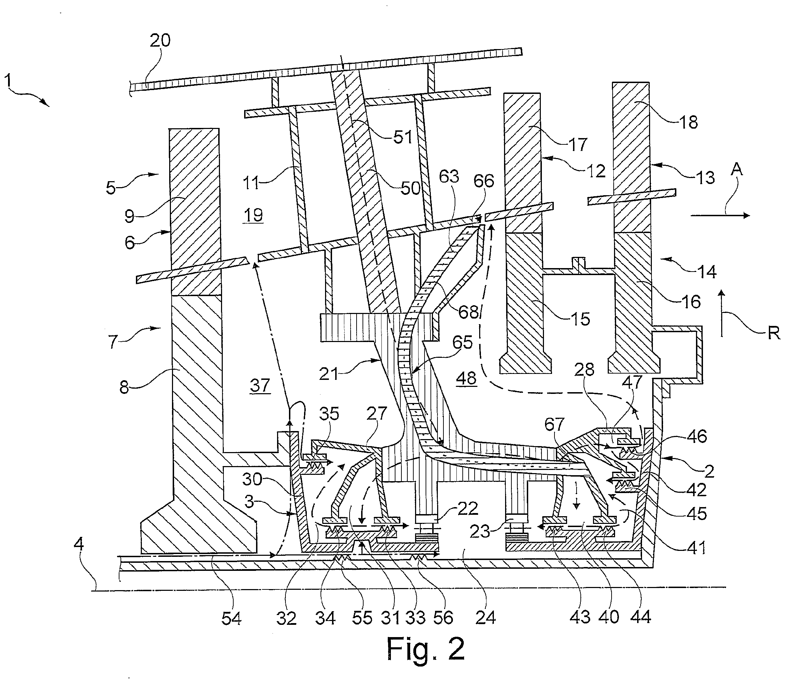

In Fig. 2 ist eine weitere Entlüftungsleitung 65 näher ersichtlich, die mit der stromab der Lagerkammer 24 angeordneten Entlüftungskammer 41 verbunden ist. Ausgehend von der Entlüftungskammer 41 erstreckt sich die Entlüftungsleitung 65 zunächst im Wesentlichen in axialer Richtung A des Strahltriebwerks 1 stromauf in Richtung des Lagerkammerträgers 21, wobei die Entlüftungsleitung 65 innerhalb des Lagerkammerträgers 21 und bis zu einem Auslass 66 der Entlüftungsleitung 65 im Wesentlichen in radialer Richtung R des Strahltriebwerks 1 nach außen verläuft. Der Auslass 66 ist dabei in axialer Richtung A des Strahltriebwerks 1 in einem Bereich angeordnet, der im Wesentlichen dem Bereich entspricht, in dem der Auslass 59 der Entlüftungsleitung 58 angeordnet ist.

Vergleichbar zu der Entlüftungsleitung 58 verläuft auch die Entlüftungsleitung 65 im Wesentlichen in einer Längsschnittebene des Strahltriebwerks 1. Die Längsschnittebene, in der die Entlüftungsleitung 65 angeordnet ist, ist gegenüber der Längsschnittebene, in der die Entlüftungsleitung 58 angeordnet ist, vorliegend um etwa 180° um die Drehachse 4 verdreht. Grundsätzlich kann ein Winkel zwischen den Längsschnittebenen, in denen die Entlüftungsleitungen angeordnet sind, beliebig gewählt sein.

Auch die Entlüftungsleitung 65 ist in einem Gießvorgang mit dem Lagerkammerträger 21 hergestellt, wobei wiederum sowohl in einem dem Kernstromkanal 19 zugewandten Bereich des Lagerkammerträgers 21 als auch in einem der Entlüftungskammer 32 zugewandten Bereich des Lagerkammerträgers 21 jeweils ein Stutzen 67, 68 bzw. eine Verlängerung angegossen ist.

Über die Entlüftungsleitung 65 kann in vergleichbarer Weise, wie zu der Entlüftungsleitung 58 beschrieben, ein Volumenstrom aus der stromab der Lagerkammer 24 angeordneten Entlüftungskammer 41 in den Kernstromkanal 19 abgeführt werden, wobei die Entlüftungsleitung 65 ebenfalls rohrartig mit einem ovalen Strömungsquerschnitt ausgeführt ist, der im Bereich der gesamten Entlüftungsleitung 65 im Wesentlichen gleich ist.

Neben der Entlüftungsleitung 58 und der weiteren Entlüftungsleitung 65 können weitere Entlüftungsleitungen vorgesehen sein, die mit der Entlüftungskammer 32 oder mit der Entlüftungskammer 41 verbunden sind und die insbesondere in weiteren Umfangsbereichen des Strahltriebwerks 1 angeordnet sind.

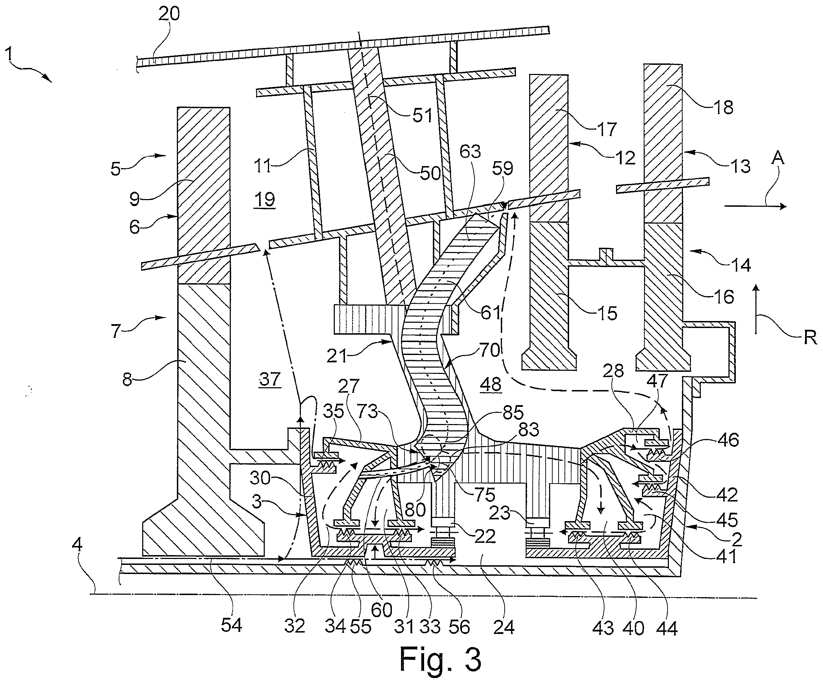

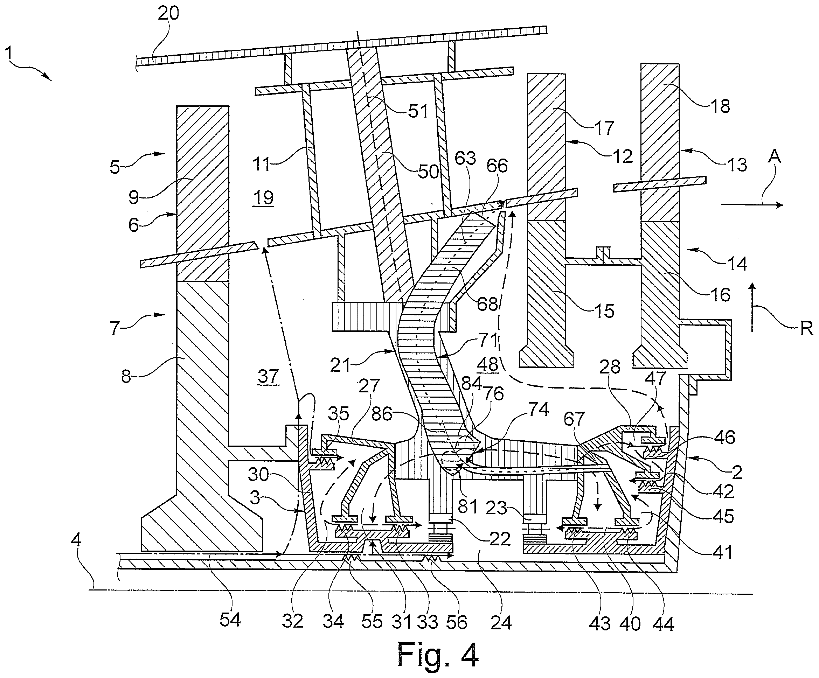

In Fig. 3 und Fig. 4 sind alternativ zu den Entlüftungsleitungen 58 und 65 ausgeführte Entlüftungsleitungen 70 und 71 gezeigt, wobei im Folgenden lediglich auf die Unterschiede zu den Entlüftungsleitungen 58 und 65 eingegangen wird und die Entlüftungsleitungen 70 und 71 ansonsten im Wesentlichen vergleichbar zu den Entlüftungsleitungen 58 und 65 ausgeführt sind.

Die Entlüftungsleitungen 70 und 71 weisen innerhalb des Lagerkammerträgers 21 jeweils einen definierten Bereich, einen sogenannten Rezirkulationsbereich 73 bzw. 74 auf, in dem sich ein Strömungsquerschnitt der Entlüftungsleitungen 70 und 71 sprunghaft um einen Faktor von vorliegend etwa zehn erhöht. Ein Winkel 75 bzw. 76 einer Wandung 80 bzw. 81 in dem jeweiligen Rezirkulationsbereich 73 bzw. 74 beträgt dabei gegenüber einer Mittelachse 85 bzw. 86 der Entlüftungsleitungen 70, 71 jeweils etwa 90°. Sowohl stromauf des jeweiligen Rezirkulationsbereichs 73 bzw. 74 als auch stromab des jeweiligen Rezirkulationsbereichs 73 bzw. 74 ist der Strömungsquerschnitt der jeweiligen Entlüftungsleitung 70 bzw. 71 im Wesentlichen konstant.

Durch die Rezirkulationsbereiche 73 bzw. 74 ist ein Bereich geschaffen, in dem eine Strömungsgeschwindigkeit in der jeweiligen Entlüftungsleitung 70 bzw. 71 reduziert wird und sich gemäß der Strömungslinien 83, 84 Rezirkulationen bzw. Verwirbelungen bilden. Hierdurch kann auf einfache Weise sichergestellt werden, dass falls ein Ölfeuer auftreten sollte, dieses im Bereich der Rezirkulationsbereiche 73 bzw. 74 auftritt und einzig an dieser Stelle stabil brennen kann. Es können gegebenenfalls Sensoren in den Rezirkulationsbereichen 73 bzw. 74 angeordnet werden, um ein derartiges Ölfeuer auf einfache Weise detektieren zu können. Zudem können die Bereiche des Lagerkammerträgers 21, in denen die Rezirkulationsbereiche 73 und 74 angeordnet sind, mit einer entsprechenden Materialstärke ausgeführt sein, so dass eine im Fall eines Ölfeuers auftretende hohe Temperatur in gewünschtem Umfang von dem Lagerkammerträger 21 aufgenommen werden kann.

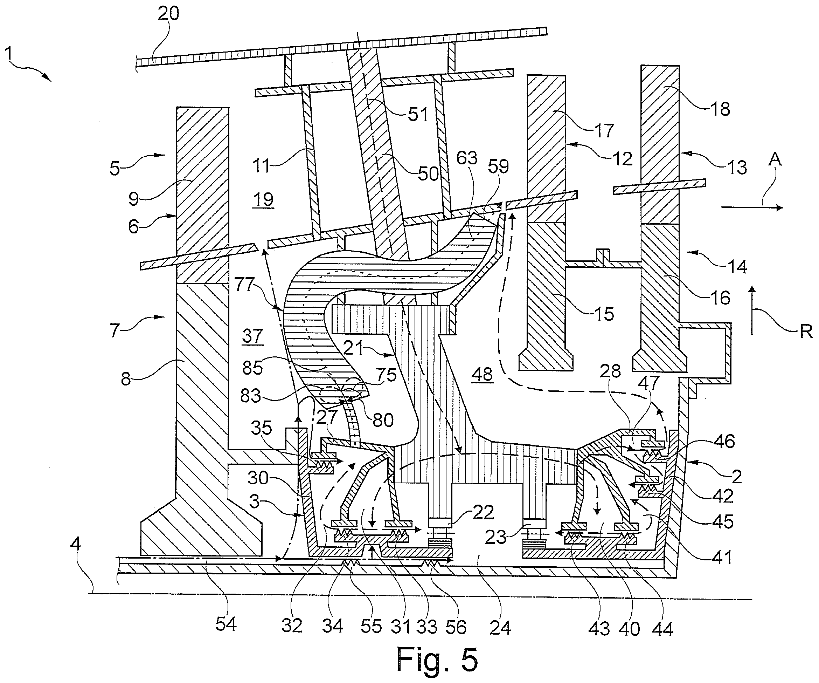

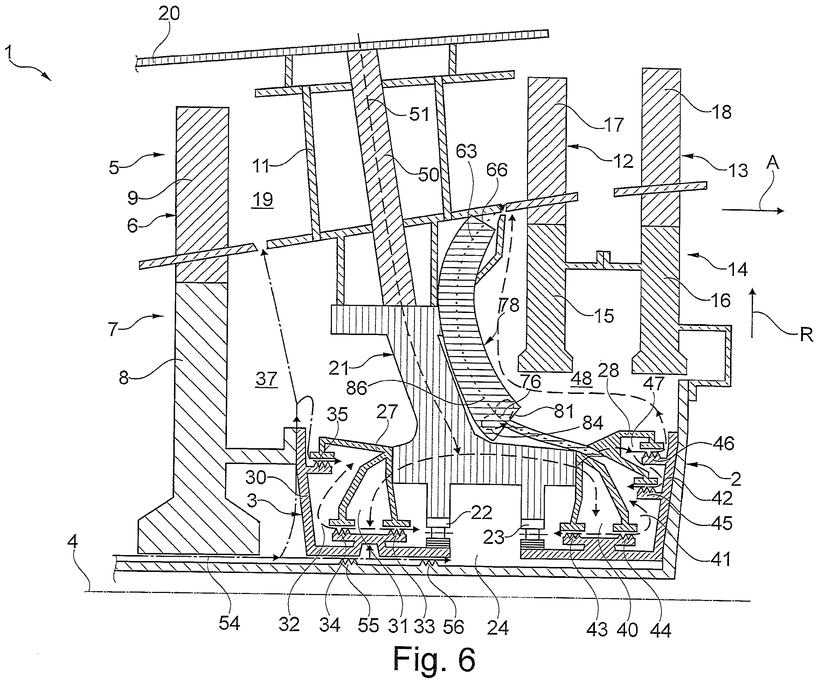

In Fig. 5 und 6 sind weitere Ausführungen von Entlüftungsleitungen 77, 78 gezeigt, die grundsätzlich vergleichbar zu den Entlüftungsleitungen 70 und 71 jeweils mit einem Rezirkulationsbereich 73, 74 ausgeführt sind. Im Unterschied zu den Entlüftungsleitungen 70, 71 sind die Entlüftungsleitungen 77, 78 allerdings als von dem Lagerkammerträger 21 separate Leitungen ausgeführt, die durch den Innenraum 37 bzw. den Innenraum 48 zu dem Annulus des Kernstromkanals 19 geführt sind. Die Entlüftungsleitungen 77, 78 sind beispielsweise mit einem hochtemperaturbeständigen Metall oder mit einem keramischen Material ausgeführt.

Bei einer hierzu alternativen Ausführung der Erfindung kann es auch vorgesehen sein, dass die Entlüftungsleitungen als von dem Lagerkammerträger separate Leitungen mit einem im Wesentlichen konstanten Strömungsquerschnitt vergleichbar zu den Entlüftungsleitungen 58 und 65 ausgeführt sind.

Bei einer alternativen Ausführung der Erfindung kann es auch vorgesehen sein, dass die Dichteinrichtungen nicht als Labyrinthdichtungen, sondern als andere Dichtungsformen ausgeführt sind.

### Bezugszeichenliste

- 1: Strahltriebwerk
- 2: Niederdruckwelle
- 3: Hochdruckwelle
- 4: Drehachse
- 5: Turbinenvorrichtung
- 6: Stufe der Hochdruckturbine
- 7: Hochdruckturbine
- 8: Scheibenrad
- 9: Laufschaufel
- 11: Leitschaufel
- 12, 13: Stufe der Niederdruckturbine
- 14: Niederdruckturbine
- 15, 16: Scheibenrad
- 17, 18: Laufschaufel
- 19: Kernstromkanal
- 20: Gehäuse
- 21: Lagerkammerträger
- 22, 23: Lagereinrichtung
- 24: Lagerkammer
- 27, 28: Dichtungsträger
- 30: Stützwelle
- 31: Sperrkammer
- 32: Entlüftungskammer
- 33, 34, 35: Dichteinrichtung; Labyrinthdichtung
- 37: Innenraum
- 40: Sperrkammer
- 41: Entlüftungskammer
- 42: Stützwelle
- 43, 44, 45, 46: Dichteinrichtung; Labyrinthdichtung
- 47: weitere Kammer
- 48: Innenraum
- 50: Sperrluftleitung
- 51: strichlierte Linie
- 54: strichpunktierte Linie
- 55, 56: Dichteinrichtung; Labyrinthdichtung
- 58: Entlüftungsleitung
- 59: Auslass
- 60, 61: Stutzen
- 63: gepunktete Linie
- 65: weitere Entlüftungsleitung
- 66: Auslass
- 67, 68: Stutzen
- 70: Entlüftungsleitung
- 71: weitere Entlüftungsleitung
- 73, 74: Rezirkulationsbereich
- 75, 76: Winkel
- 77: Entlüftungsleitung
- 78: weitere Entlüftungsleitung
- 80, 81: Wandung
- 83, 84: Strömungslinie
- 85, 86: Mittelachse
- A: axiale Richtung des Strahltriebwerks
- R: radiale Richtung des Strahltriebwerks

## Patentansprüche

1. Strahltriebwerk (1) mit einer Lagerkammer (24), einer Sperrkammer (31, 40), einer Entlüftungskammer (32, 41) und einem Lagerkammerträger (21), der bereichsweise die wenigstens eine Lagereinrichtung (22, 23) aufweisende Lagerkammer (24) begrenzt, wobei die Lagerkammer (24) über eine Dichtungseinrichtung (33, 43) von der Sperrkammer (31, 40) getrennt ist, die wiederum über eine weitere Dichtungseinrichtung (34, 44) von der auf einer der Lagerkammer (24) abgewandten Seite der Sperrkammer (31, 40) angeordneten Entlüftungskammer (32, 41) getrennt ist, und wobei die Sperrkammer (31, 40) mit einer Sperrluftleitung (50) verbunden ist, mittels der die Lagerkammer (24) mit einem Sperrluftvolumenstrom versorgbar ist, und die Entlüftungskammer (32, 41) mit einer Entlüftungseinrichtung (58, 65, 70, 71, 77, 78) verbunden ist, über die ein Volumenstrom aus der Entlüftungskammer (32, 41) in einen Kernstromkanal (19) des Strahltriebwerks (1) abführbar ist, wobei die Entlüftungseinrichtung (58, 65, 70, 71, 77, 78) als wenigstens eine Entlüftungsleitung mit einem rohrförmigen Strömungsquerschnitt ausgeführt ist, und wobei die Entlüftungsleitung (70, 71, 77, 78) einen Bereich (73, 74) mit einer definierten Querschnittserweiterung aufweist, **dadurch gekennzeichnet, dass** ein Strömungsquerschnitt der Entlüftungsleitung (70, 71, 77, 78) stromab des Bereichs (73, 74) gegenüber einem Strömungsquerschnitt in dem Bereich (73, 74) im Wesentlichen nicht vergrößert ist.

2. Strahltriebwerk nach Anspruch 1, **dadurch gekennzeichnet, dass** der Lagerkammerträger (21) als ein Gussbauteil ausgeführt ist und die Entlüftungsleitung (58, 65, 70, 71) Teil des Lagerkammerträgers ist.

3. Strahltriebwerk nach Anspruch 1, **dadurch gekennzeichnet, dass** die Entlüftungsleitung (77, 78) als separate Leitung ausgeführt ist, die zumindest bereichsweise in einem Umfangsbereich des Lagerkammerträgers (24) angeordnet ist.

4. Strahltriebwerk nach einem der Ansprüche 1 bis 3, **dadurch gekennzeichnet, dass** der Strömungsquerschnitt der Entlüftungsleitung (70, 71, 77, 78) in dem Bereich (73, 74) um einen Faktor von mindestens zwei, vorzugsweise von etwa zehn zunimmt.

5. Strahltriebwerk nach einem der Ansprüche 1 bis 4, **dadurch gekennzeichnet, dass** eine Wandung (80, 81) der Entlüftungsleitung (70, 71, 77, 78) in dem Bereich (73, 74) gegenüber einer Mittelachse (85, 86) der Entlüftungsleitung (70, 71, 77, 78) einen Winkel aufweist, der größer als 15°, insbesondere größer als 60°, vorzugsweise größer als 75° ist, und insbesondere etwa 90° beträgt.

6. Strahltriebwerk nach einem der Ansprüche 1 bis 5, **dadurch gekennzeichnet, dass** die Sperrkammer (31, 40) und die Entlüftungskammer (32, 41) jeweils stromab und/oder stromauf der Lagerkammer (24) angeordnet sind.

7. Strahltriebwerk nach Anspruch 6, **dadurch gekennzeichnet, dass** wenigstens eine Entlüftungsleitung (58, 70, 77) mit der Entlüftungskammer (32) stromauf der Lagerkammer (24) und wenigstens eine weitere Entlüftungsleitung (65, 71, 78) mit der Entlüftungskammer (41) stromab der Lagerkammer (24) verbunden ist.

8. Strahltriebwerk nach Anspruch 7, **dadurch gekennzeichnet, dass** die Entlüftungsleitung (58, 70, 77) und die weitere Entlüftungsleitung (65, 71, 78) in verschiedenen Umfangsbereichen des Strahltriebwerks (1) angeordnet sind.

9. Strahltriebwerk nach einem der Ansprüche 7 oder 8, **dadurch gekennzeichnet, dass** die Entlüftungsleitung (58, 70, 77) und die weitere Entlüftungsleitung (65, 71, 78) stromauf des Kernstromkanals (19) miteinander verbunden sind.

10. Strahltriebwerk nach einem der Ansprüche 1 bis 9, **dadurch gekennzeichnet, dass** der Lagerkammerträger (21) im Bereich einer Turbineneinrichtung (5) und/oder einer Verdichtereinrichtung des Strahltriebwerks (1) angeordnet ist.

## Claims

1. Jet engine (1) having a bearing chamber (24), a sealing chamber (31, 40), a ventilation chamber (32, 41) and a bearing chamber carrier (21), which bearing chamber carrier regionally delimits the bearing chamber (24), which has at least one bearing device (22, 23), wherein the bearing chamber (24) is separated by means of a seal device (33, 43) from the sealing chamber (31, 40), which sealing chamber is in turn separated by means of a further seal device (34, 44) from the ventilation chamber (32, 41), which is arranged on a side of the sealing chamber (31, 40) which is averted from the bearing chamber (24), and wherein the sealing chamber (31, 40) is connected to a sealing air line (50), by means of which a sealing air volume flow can be supplied to the bearing chamber (24), and the ventilation chamber (32, 41) is connected to a ventilation device (58, 65, 70, 71, 77, 78), via which a volume flow can be discharged from the ventilation chamber (32, 41) into a core flow channel (19) of the jet engine (1), wherein the ventilation device (58, 65, 70, 71, 77, 78) is configured as at least one ventilation line with a tubular flow cross section, and wherein the ventilation line (70, 71, 77, 78) has a region (73, 74) with a defined cross-sectional widening, **characterized in that** a flow cross section of the ventilation line (70, 71, 77, 78) downstream of the region (73, 74) is substantially not enlarged in relation to a flow cross section in the region (73, 74).

2. Jet engine according to Claim 1, **characterized in that** the bearing chamber carrier (21) is configured as a cast component, and the ventilation line (58, 65, 70, 71) is part of the bearing chamber carrier.

3. Jet engine according to Claim 1, **characterized in that** the ventilation line (77, 78) is configured as a separate line, which is arranged at least regionally in a circumferential region of the bearing chamber carrier (24).

4. Jet engine according to any one of Claims 1 to 3, **characterized in that** the flow cross section of the ventilation line (70, 71, 77, 78) increases by a factor of at least two, preferably of approximately ten, in the region (73, 74).

5. Jet engine according to any one of Claims 1 to 4, **characterized in that** a wall (80, 81) of the ventilation line (70, 71, 77, 78) in the region (73, 74) has an angle of greater than 15°, in particular greater than 60°, preferably greater than 75°, and in particular of approximately 90°, with respect to a central axis (85, 86) of the ventilation line (70, 71, 77, 78).

6. Jet engine according to any one of Claims 1 to 5, **characterized in that** the sealing chamber (31, 40) and the ventilation chamber (32, 41) are arranged in each case downstream and/or upstream of the bearing chamber (24).

7. Jet engine according to Claim 6, **characterized in that** at least one ventilation line (58, 70, 77) is connected to the ventilation chamber (32) upstream of the bearing chamber (24), and at least one further ventilation line (65, 71, 78) is connected to the ventilation chamber (41) downstream of the bearing chamber (24).

8. Jet engine according to Claim 7, **characterized in that** the ventilation line (58, 70, 77) and the further ventilation line (65, 71, 78) are arranged in different circumferential regions of the jet engine (1).

9. Jet engine according to either one of Claims 7 and 8, **characterized in that** the ventilation line (58, 70, 77) and the further ventilation line (65, 71, 78) are connected to one another upstream of the core flow channel (19).

10. Jet engine according to any one of Claims 1 to 9, **characterized in that** the bearing chamber carrier (21) is arranged in the region of a turbine device (5) and/or of a compressor device of the jet engine (1).

## Revendications

1. Moteur à réaction (1) comprenant une chambre de palier (24), une chambre de blocage (31, 40), une chambre de purge (32, 41) et un support de chambre de palier (21) qui délimite par endroits la chambre de palier (24) qui comporte au moins un dispositif de palier (22, 23), la chambre de palier (24) étant séparée de la chambre de blocage (31, 40) par un dispositif d'étanchéité (33, 43), qui est séparé à son tour de la chambre de purge (32, 41), qui est disposée du côté de la chambre de blocage (31, 40) qui est opposé à la chambre de palier (24), par un autre dispositif d'étanchéité (34, 44) et la chambre de blocage (31, 40) étant reliée à une conduite d'air de blocage (50) permettant d'alimenter la chambre de palier (24) avec un flux volumique d'air de blocage, et la chambre de purge (32, 41) étant reliée à un dispositif de purge (58, 65, 70, 71, 77, 78) permettant d'évacuer un flux volumique de la chambre de purge (32, 41) jusque dans un canal de flux central (19) du moteur à réaction (1), le dispositif de purge (58, 65, 70, 71, 77, 78) étant conçu comme au moins une conduite de purge de section d'écoulement transversale tubulaire, et la conduite de purge (70, 71, 77, 78) comportant une zone (73, 74) ayant une section transversale élargie définie, **caractérisé en ce qu'**une section d'écoulement transversale de la conduite de purge (70, 71, 77, 78) en aval de la zone (73, 74) n'est sensiblement pas agrandie par rapport à une section d'écoulement transversale dans la zone (73, 74).

2. Moteur à réaction selon la revendication 1, **caractérisé en ce que** le support de chambre de palier (21) est conçu comme un composant moulé et la conduite de purge (58, 65, 70, 71) fait partie du support de chambre de palier.

3. Moteur à réaction selon la revendication 1, **caractérisé en ce que** la conduite de purge (77, 78) est conçue comme une conduite séparée qui est disposée au moins par endroits dans une zone circonférentielle du support de chambre de palier (24).

4. Moteur à réaction selon l'une des revendications 1 à 3, **caractérisé en ce que** la section d'écoulement transversale de la conduite de purge (70, 71, 77, 78) dans la zone (73, 74) augmente d'un facteur d'au moins deux, de préférence d'environ dix.

5. Moteur à réaction selon l'une des revendications 1 à 4, **caractérisé en ce qu'**une paroi (80, 81) de la conduite de purge (70, 71, 77, 78) dans la zone (73, 74) fait par rapport à un axe central (85, 86) de la conduite de purge (70, 71, 77, 78) un angle qui est supérieur à 15°, notamment supérieur à 60°, de préférence supérieur à 75°, et en particulier d'environ 90°.

6. Moteur à réaction selon l'une des revendications 1 à 5, **caractérisé en ce que** la chambre de blocage (31, 40) et la chambre de purge (32, 41) sont disposées respectivement en aval et/ou en amont de la chambre de palier (24).

7. Moteur à réaction selon la revendication 6, **caractérisé en ce qu'**au moins une conduite de purge (58, 70, 77) est reliée à la chambre de purge (32) en amont de la chambre de palier (24) et au moins une autre conduite de purge (65, 71, 78) est reliée à la chambre de purge (41) en aval de la chambre de palier (24).

8. Moteur à réaction selon la revendication 7, **caractérisé en ce que** la conduite de purge (58, 70, 77) et l'autre conduite de purge (65, 71, 78) sont disposées dans des zones circonférentielles différentes du moteur à réaction (1).

9. Moteur à réaction selon l'une des revendications 7 et 8, **caractérisé en ce que** la conduite de purge (58, 70, 77) et l'autre conduite de purge (65, 71, 78) sont reliées l'une à l'autre en amont du canal de flux central (19).

10. Moteur à réaction selon l'une des revendications 1 à 9, **caractérisé en ce que** le support de chambre de palier (21) est disposé dans la zone d'un dispositif formant turbine (5) et/ou d'un dispositif formant compresseur du moteur à réaction (1).
